# EUROPÄISCHE PATENTSCHRIFT

(11) **EP 3 230 831 B1**
(45) Veröffentlichungstag und Bekanntmachung des Hinweises auf die Patenterteilung: **20.11.2019**
(21) Anmeldenummer: 15819780.6
(22) Anmeldetag: 01.12.2015
(51) Int. Cl.: G06F 3/01, G06F 3/0354

(54) **HAPTISCHES FEEDBACK-ELEMENT EINES EINGABEELEMENTS FÜR ELEKTRONISCHE APPARATE**
HAPTIC FEEDBACK ELEMENT OF AN INPUT ELEMENT FOR ELECTRONIC DEVICES
ÉLÉMENT À RÉTROACTION HAPTIQUE D'UN ÉLÉMENT D'ENTRÉE POUR APPAREILS ÉLECTRONIQUES

(30) Priorität: 12.12.2014 AT 9002014
(43) Veröffentlichungstag der Anmeldung: 18.10.2017
(73) Patentinhaber: Next System Vertriebsges.m.b.H., 1210 Wien (AT)
(72) Erfinder: KELTSCHA, Gregor, A-3040 Neulengbach (AT); NUSSBAUMER, Michael, A-4690 Pitzenberg (AT); PLACHY, Thomas, A-4813 Altmünster (AT)
(74) Vertreter: Keschmann, Marc
(86) Internationale Anmeldenummer: PCT/AT2015/000154
(87) Internationale Veröffentlichungsnummer: WO 2016/090393

(56) Entgegenhaltungen:
- WO-A1-2011/161489
- US-A1- 2009 255 793
- US-A1- 2010 171 715
- US-A1- 2011 234 494

## Beschreibung

Die Erfindung betrifft einen Aktuator für ein haptisches Feedback-Element eines Eingabeelements für elektronische Apparate, der als elektrostatischer Parallelplatten-Aktuator ausgebildet ist, umfassend in einem variablen Normalabstand zueinander gehaltene Elektrodenplatten, an welche eine elektrische Spannung anlegbar ist und zwischen welchen ein von Luft verschiedenes Dielektrikum angeordnet ist.

Weiters betrifft die Erfindung ein Eingabeelement für elektronische Apparate, umfassend eine translatorisch bewegbare Berührungsfläche und ein haptisches Feedback-Element, um die Berührungsfläche translatorisch auszulenken, wobei das Feedback-Element einen Aktuator der oben genannten Art aufweist.

Ein solches Eingabeelement ist beispielsweise in der WO 2010/080917 A1 beschrieben. Das Eingabeelement ist beispielsweise als berührungsempfindliche elektronische Anzeigeeinrichtung (Touchscreen) ausgebildet. Ein Touchscreen ist ein kombiniertes Ein- und Ausgabegerät, bei dem durch Berührung von Teilen eines Bildes der Programmablauf eines technischen Gerätes, meist eines Computers, direkt gesteuert werden kann. Das Eingabeelement kann auch ein Touchpad eines technischen Gerätes sein. Dadurch, dass die Berührungsfläche des Touchscreens oder Touchpads translatorisch bewegbar ist, wobei die translatorische Bewegung mittels eines Aktuators gesteuert wird, wird die Möglichkeit eines haptischen Feedbacks geschaffen. Die Ansteuerung des Aktuators kann dabei in Abhängigkeit von Benutzereingaben erfolgen, beispielsweise um eine Benutzereingabe zu bestätigen. Ein solches haptisches Feedback erleichtert die Bedienung eines technischen Geräts mittels Touchscreen oder Touchpad.

Der Aktuator zum Antrieb der translatorischen Bewegung der Berührungsfläche ist bei der in der WO 2010/080917 A1 beschriebenen Ausführung als elektrostatischer Parallelplatten-Aktuator ausgebildet. Ein elektrostatischer Parallelplatten-Aktuator umfasst zwei Elektrodenplatten, die in einem variablen Normalabstand zueinander gehalten sind. Die eine Elektrodenplatte ist relativ zu einem Gehäuse oder dgl. des elektronischen Geräts starr angeordnet. Die andere, mit der Berührungsfläche zusammenwirkende Elektrodenplatte ist gegen die Kraft eines Rückstellelements auslenkbar. Zwischen den beiden Elektrodenplatten ist ein Zwischenraum vorgesehen, in dem ein Dielektrikum angeordnet ist. Wenn nun eine Spannung an die Elektrodenplatten angelegt wird, entstehen elektrostatische Kräfte, welche im Sinne einer Abstoßung oder Anziehung der Elektrodenplatten wirken und eine entsprechende Auslenkung der beweglich gehaltenen Elektrodenplatte bewirken. Das Rückstellelement sorgt für die Rückstellung der beweglich gehaltenen Elektrodenplatte in ihre Ausgangsposition.

Bei der Druckausübung auf das haptische Feedback-Element wird ein Luftspalt zwischen den Elektrodenplatten essentiell verkleinert, wodurch die Gesamtkapazität des von den Elektrodenplatten gebildeten Kondensators steigt. Bei Erreichen eines einstellbaren Sollwertes wird ein Hochspannungspuls angelegt, welcher einen Kraftimpuls erzeugt, der u.a. von der Elektrodenfläche und der Spannungsamplitude abhängt.

Als Dielektrikum können in einfacher Weise herkömmliche Schaltungsträgermaterialien, insbesondere Leiterplatten aus FR-4, zum Einsatz gelangen. Bei der Verwendung solcher Schaltungsträgermaterialien nimmt die Stärke der Kraftwirkung derzeit bei gleichbleibenden von außen steuerbaren Parametern von Puls zu Puls deutlich ab. Die ursprüngliche Kraftstärke kann erst nach einer Relaxationszeit von vielen Stunden erneut beobachtet werden.

Die einfachste Möglichkeit der Ableitung von Oberflächenladung bietet ein "schlechtes" Dielektrikum, welches einerseits eine ausreichend hohe Leitfähigkeit besitzt, um die aus der Luft herangeführten Ladungsträger abzuleiten, andererseits aber doch eine so geringe Leitfähigkeit, dass in der Luft lediglich Dunkelentladungen existieren und heiße Entladungskerne auf der Oberfläche des Dielektrikums wirksam verhindert werden. Letztere wären zumindest - wie Teilentladungen in einem Dielektrikum - relevant für die Lebensdauer des Dielektrikums. Es fließt permanent ein Ableitstrom durch das Dielektrikum, sobald eine Feldstärke im Dielektrikum wirkt und Ladungen aus der Luft nachgeliefert werden.

Die Leitfähigkeit des Dielektrikums bringt gegenüber einer perfekt isolierenden Schicht eine weitere Verbesserung mit sich: Durch die höhere Leitfähigkeit wird ebenso wie durch eine höhere Permittivität die Feldstärke im Dielektrikum verkleinert und somit die wirksame Feldstärke im Luftspalt vergrößert, wodurch eine fühlbar stärkere Anziehungskraft möglich wird.

Herkömmliche Schaltungsträgermaterialien mit hoher relativer Permittivität besitzen meist hohe Isolationswiderstände. Materialien mit schlechtem Isolationswiderstand haben meist auch eine geringe relative Permittivität. Je dünner das Dielektrikum ist, desto höher wird das elektrische Feld. Dabei ist darauf zu achten, dass es zu keinen Durchschlägen im Material kommt.

Das ideale Dielektrikum für ein gutes taktiles Feedback soll zur Erzeugung eines hohen elektrischen Feldes eine hohe relative Permittivität haben. Dadurch erfolgt meist eine Aufladung des Dielektrikums, daher ist es wichtig dass der Isolationswiderstand relativ klein ist, um die Aufladung in kurzer Zeit (0,1s - 1s) wieder abzuleiten. Ist der Widerstand zu groß, erfolgt eine Aufladung des Dielektrikums und das taktile Feedback wird mit jeder Auslösung schwächer. Der widerstand darf aber auch nicht zu klein sein, um eine direkte Ableitung und Überschläge zu verhindern.

Ein Aktuator gemäß der eingangs genannten Art ist weiters aus der US 2010/171715 A1 bekannt.

In der US 2011/234494 A1 und der US 2009/255793 A1 werden haptische Feedback-Elemente beschrieben.

Aus der WO 2011/161489 A1 ist ein User-Interface mit einer selbstreinigenden Zusammensetzung bekannt.

Die Erfindung zielt daher drauf ab, einen Aktuator der eingangs genannten Art dahingehend zu verbessern, dass der durch das elektrische Feld erzeugte Kraftimpuls über eine Vielzahl von aufeinanderfolgenden Auslösungen annähernd gleich stark bleibt, ohne dass die Gefahr von Überschlägen besteht. Gleichzeitig soll die Bauhöhe des Aktuators minimiert werden.

Die Erfindung ist in den Ansprüchen definiert.

Zur Lösung dieser Aufgabe ist der Aktuator der eingangs genannten Art erfindungsgemäß im Wesentlichen derart weitergebildet, dass das Dielektrikum eine relative Permittivität von 5-1000 und einen spezifischen Isolationswiderstand von 10⁷-10¹⁰ Ωm aufweist. Es hat sich gezeigt, dass es mit einer solchen Auslegung des Dielektrikums gelingt, allen oben genannten Anforderungen zu entsprechen. Insbesondere gelingt es dadurch auch bei einer relativ dünnen Ausführung des Dielektrikums einerseits eine ausreichende elektrische Feldstärke im Luftspalt aufzubauen, zu welchem Zweck die relative Permittivität in dem genannten Bereich liegt, andererseits aber auch eine Minimierung der Relaxationszeit vorzunehmen, zu welchem Zweck der spezifische Isolationswiderstand im oben genannten Bereich liegt. Es wird somit eine relativ hohe Permittivität mit einem relativ niedrigen spezifischen Isolationswiderstand kombiniert, wodurch die Erfindung eine Abkehr von herkömmlichen verfügbaren Dielektrika bedeutet, bei welchen entweder eine hohe relative Permittivität mit einem hohen spezifischen Isolationswiderstand oder eine niedrige relative Permittivität mit einem niedrigen spezifischen Isolationswiderstand verbunden war. Die erfindungsgemäße Kombination der Permittivitätswerte mit den Isolationswiderstandswerten stellt gleichzeitig sicher, das keine Gefahr von Überschlägen besteht.

Eine weitere Optimierung gelingt gemäß einer bevorzugten Weiterbildung dadurch, dass das Dielektrikum eine relative Permittivität von 20-1000, vorzugsweise 50-1000 aufweist.

Hinsichtlich des Isolationswiderstands kann bevorzugt vorgesehen sein, dass das Dielektrikum einen spezifischen Isolationswiderstand von 10⁷-10⁹ Ωm, vorzugsweise 10⁷-10⁸ Ωm aufweist.

Was den mechanischen Aufbau des Aktuators betrifft, sieht eine bevorzugte Ausbildung vor, dass wenigstens eine Elektrodenplatte relativ zu einer starr angeordneten Elektrodenplatten auslenkbar gehalten ist. Dabei kann der Aktuator so in einem Eingabeelement eines elektronischen Apparats eingebaut sein, dass die Bewegung der auslenkbar gehaltenen Elektrodenplatte mit einer Berührungs- oder Bedienoberfläche des Eingabeelements gekoppelt ist, sodass die Auslenkung der Elektrodenplatte zu einer entsprechenden translatorischen Bewegung der Berührungs- oder Bedienoberfläche führt. Wenn das Eingabeelement einen Touchscreen umfasst, kann die berührungsempfindliche Oberfläche des Touchscreens die Berührungsfläche des Eingabeelements bilden. Die auslenkbar gehaltene Elektrodenplatte ist beispielsweise an der Unterseite des Touchscreens angeordnet.

Um eine selbsttätige Rückstellung des Aktuators zu bewirken, sobald der an die Elektrodenplatten angelegte Spannungsimpuls vorbei ist, ist bevorzugt vorgesehen, dass die wenigstens eine Elektrodenplatte gegen die Kraft eines Rückstellelements auslenkbar ist. Das Rückstellelement kann beispielsweise als Federelement ausgebildet sein.

Im Ausgangszustand des Aktuators ist zwischen den beiden Elektrodenplatten ein Luftspalt vorgesehen, welcher die Bewegung der auslenkbar gehaltenen Elektrodenplatte in Richtung zur anderen Elektrodenplatte erlaubt. Das Dielektrikum ist bevorzugt an einer der beiden Elektrodenplatten angeordnet, insbesondere mit dieser verbunden.

Eine bevorzugte Ausbildung sieht vor, dass eine Elektrodenplatte, insbesondere die starre Elektrodenplatte, von einer Metallplatte oder einem Metallgitter gebildet ist. Eine weitere bevorzugte Ausbildung sieht vor, dass eine Elektrodenplatte, insbesondere die wenigstens eine auslenkbare Elektrodenplatte, von einer Metall-, insbesondere Kupferbeschichtung einer Trägerplatte gebildet ist. Die Trägerplatte kann hierbei von einer Leiterplatte gebildet sein, deren Kupferbeschichtung die Elektrodenplatte ausbildet. Dadurch kann die Bauhöhe des Aktuators weiter reduziert werden.

Grundsätzlich ist es nicht ausschlaggebend, ob die starre oder die auslenkbar gehaltene Elektrodenplatte mit der Hochspannungsquelle verbunden ist, wobei die andere Elektrodenplatte jeweils mit dem Massepotential verbunden ist. Bevorzugt ist jedoch vorgesehen, dass die hochspannungsführende Elektrodenplatte auslenkbar gehalten wird.

Um die Bauhöhe des Aktuators zu minimieren, kann das Dielektrikum lediglich als Beschichtung ausgebildet ausgeführt sein. Eine bevorzugte Ausbildung sieht in diesem Zusammenhang vor, dass das Dielektrikum wenigstens eine auf einer Elektrodenplatte, insbesondere auf die Metallbeschichtung, aufgebrachte Dielektrikumsschicht umfasst. Die Dielektrikumsschicht kann beispielsweise mittels einer Rakel oder im Siebdruckverfahren aufgetragen werden. Dadurch lässt sich das Dielektrikum ohne weiteres sehr dünn ausbilden, wobei bevorzugt vorgesehen ist, dass das Dielektrikum eine Dicke von 200-300µm aufweist.

Eine bevorzugte Auswahl des Materials des Dielektrikums kann dahingehend erfolgen, dass die wenigstens eine Dielektrikumsschicht von einer Schicht einer Isolationspaste und/oder einer Schicht einer Widerstandspaste gebildet ist. Insbesondere hat sich gezeigt, dass man mit einer Kombination einer Widerstandspaste mit einer Isolationspaste in einfacher Weise ein Dielektrikum mit den erfindungsgemäßen Werten für die relative Permittivität und dem spezifischen Isolationswiderstand herstellen kann. Als Ausgangsbasis dient hierbei die Isolationspaste. Diese wird durch Beimengen der Widerstandspaste geringfügig leitfähig gemacht. Als Widerstandspaste kann die Paste RS12112 von ESL Electroscience zum Einsatz kommen. Als Isolationspaste kann eine Paste auf Epoxy-Harz Basis verwendet werden, wie beispielsweise die Paste 243-S von ESL Electroscience.

Um den geforderten Wert der relativen Permittivität in einfacher Weise einzustellen, ist bevorzugt vorgesehen, dass die wenigstens eine Dielektrikumsschicht mit einem permittivitätserhöhenden Material, vorzugsweise einem keramischen Pulver, wie z.B. Calciumkupfertitantat, versetzt ist.

Die Erfindung wird nachfolgend anhand eines in der Zeichnung schematisch dargestellten Ausführungsbeispiels näher erläutert.

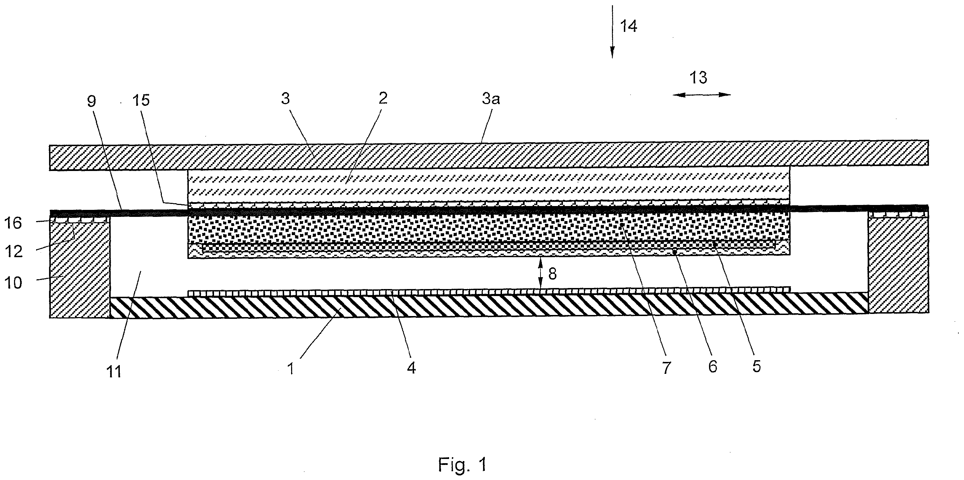

In Fig. 1 zeigt den Aufbau eines Eingabeelements mit dem erfindungsgemäßen Aktuator. Das Eingabeelement gemäß Fig. 1 weist ein Rahmenelement 1 auf, das zu einem Gehäuse eines elektronischen Apparats gehört. Mit 2 ist ein Touchscreen bezeichnet, d.h. eine Kombination einer elektronischen Anzeigevorrichtung, wie beispielsweise eine LCD-Anzeige, mit einem Berührungssensor, sodass durch Berührung von Teilen des auf der Anzeigeeinrichtung angezeigten Bildes der Programmablauf des technischen Geräts gesteuert werden kann. Der Touchscreen 2 weist ein den Touchscreen 2 überdeckendes Coverglas 3 mit einer Berührungsfläche 3a auf, welche durch den Finger eines Benutzers berührt werden kann, um das elektronische Gerät zu steuern. Zwischen dem Touchscreen 2 und der Gehäuseplatte 1 ist ein elektrostatischer Parallelplatten-Aktuator angeordnet, der zwei Elektrodenplatten 4 und 5 aufweist. Die erste Elektrodenplatte 4 ist als Gitter aus einander kreuzenden elektrisch leitenden Drähten ausgebildet und ist auf dem Rahmen 1 aufgespannt. Die zweite Elektrodenplatte 5 ist als auf einer Trägerplatte 7 aufgebrachte Metallschicht ausgebildet und über diese mit dem Touchscreen 2 zu gemeinsamer Bewegung verbunden. Weiters trägt die zweite Elektrodenplatte 5 ein Dielektrikum 6. Zwischen dem Dielektrikum 6 und dem Gitter 4 verbleibt ein Luftspalt 8. Zwischen dem Touchscreen 2 und der zweiten Elektrodenplatte 5 ist eine elastische transparente Folie 9 angeordnet, insbesondere angeklebt (Klebeschicht 15), welche den Touchscreen 2 allseits überragt und dadurch den zwischen dem Gehäuseelement 10 und dem äußeren Rand des Touchscreens 2 angeordneten umlaufenden Spalt 11 überbrückt. Der äußere Rand der Folie 9 ist am Gehäuseelement 10 befestigt, insbesondere mit diesem verklebt (Klebeschicht 16), und zwar an der Fläche 12 des Gehäuseelements 10, die den Touchscreen 2 rahmenförmig umgibt.

In der in Fig. 1 dargestellten Ausgangsposition des Feedback-Elements ist die Folie 9 im Wesentlichen eben gespannt, sodass die Folie 9 das Feedback-Element in der Folienebene positioniert, sodass es in Richtung des Doppelpfeils 13 sowie quer zur Zeichenebene im Wesentlichen unbeweglich gehalten ist. Aufgrund der Anordnung der Folie 9 ist das Feedback-Element jedoch relativ zum gehäusefesten Gitter 4 ausgehend von der in Fig. 1 dargestellten Ausgangsposition in Richtung des Pfeils 14 auslenkbar gehalten. Die Elektrodenplatten 4 und 5 sind so mit einer elektrischen Spannungsversorgung verbunden (nicht dargestellt), dass zwischen den beiden Elektrodenplatten 4,5 eine Spannungsdifferenz aufgebaut werden kann, wodurch elektrostatische Kräfte entstehen, welche zu einer gegenseitigen Anziehung der Elektrodenplatten 4,5 führen. Dabei ist es bevorzugt, dass die zweite Elektrodenplatte 5 mit einer Hochspannungsquelle verbunden ist und das Gitter 4 mit Massepotential.

Das Dielektrikum 6 ist als dünne Beschichtung auf der zweiten Elektrodenplatte 5 ausgeführt und weist bevorzugt eine Dicke von 200-300 µm auf. Die Dielektrikumsbeschichtung kann beispielsweise eine Mischung einer Isolationspaste mit einer Widerstandspaste sein, wobei die Mischung mit einem keramischen Pulver, wie z.B. Calciumkupfertitantat, versetzt ist.

## Patentansprüche

1. Aktuator für ein haptisches Feedback-Element eines Eingabeelements für elektronische Apparate, der als elektrostatischer Parallelplatten-Aktuator ausgebildet ist, umfassend in einem variablen Normalabstand zueinander gehaltene Elektrodenplatten (4,5), an welche eine elektrische Spannung anlegbar ist und zwischen welchen ein von Luft verschiedenes Dielektrikum (6) angeordnet ist, **dadurch gekennzeichnet, dass** das Dielektrikum (6) eine relative Permittivität von 5-1000 und einen spezifischen Isolationswiderstand von 10⁷-10¹⁰ Ωm aufweist.

2. Aktuator nach Anspruch 1, **dadurch gekennzeichnet, dass** das Dielektrikum (6) eine relative Permittivität von 20-1000, vorzugsweise 50-1000 aufweist.

3. Aktuator nach Anspruch 1 oder 2, **dadurch gekennzeichnet, dass** das Dielektrikum (6) einen spezifischen Isolationswiderstand von 10⁷-10⁹ Ωm, vorzugsweise 10⁷-10⁸ Ωm aufweist.

4. Aktuator nach Anspruch 1, 2 oder 3, **dadurch gekennzeichnet, dass** wenigstens eine Elektrodenplatte (4,5) relativ zu einer starr angeordneten Elektrodenplatte (4,5) auslenkbar gehalten ist.

5. Aktuator nach Anspruch 4, **dadurch gekennzeichnet, dass** die wenigstens eine Elektrodenplatte (4,5) gegen die Kraft eines Rückstellelements auslenkbar ist.

6. Aktuator nach einem der Ansprüche 1 bis 5, **dadurch gekennzeichnet, dass** eine Elektrodenplatte (4,5), insbesondere die starre Elektrodenplatte (4,5), von einer Metallplatte oder einem Metallgitter gebildet ist.

7. Aktuator nach einem der Ansprüche 1 bis 6, **dadurch gekennzeichnet, dass** eine Elektrodenplatte (4,5), insbesondere die wenigstens eine auslenkbare Elektrodenplatte (4,5), von einer Metall-, insbesondere Kupferbeschichtung einer Trägerplatte (7) gebildet ist.

8. Aktuator nach einem der Ansprüche 1 bis 7, **dadurch gekennzeichnet, dass** das Dielektrikum (6) wenigstens eine auf einer Elektrodenplatte (4,5), insbesondere auf die Metallbeschichtung, aufgebrachte Dielektrikumsschicht umfasst.

9. Aktuator nach Anspruch 8, **dadurch gekennzeichnet, dass** die wenigstens eine Dielektrikumsschicht von einer Schicht einer Isolationspaste und/oder einer Schicht einer Widerstandspaste gebildet ist.

10. Aktuator nach Anspruch 8 oder 9, **dadurch gekennzeichnet, dass** die wenigstens eine Dielektrikumsschicht mit einem permittivitätserhöhenden Material, vorzugsweise einem keramischen Pulver, wie z.B. Calciumkupfertitantat, versetzt ist.

11. Aktuator nach Anspruch 8, 9 oder 10, **dadurch gekennzeichnet, dass** das Dielektrikum (6) eine Dicke von 200-300µm aufweist.

12. Aktuator nach einem der Ansprüche 8 bis 11, **dadurch gekennzeichnet, dass** die Trägerplatte (7) von einer Leiterplatte gebildet ist.

13. Eingabeelement für elektronische Apparate, umfassend eine translatorisch bewegbare Berührungsfläche und ein haptisches Feedback-Element, um die Berührungsfläche translatorisch auszulenken, wobei das Feedback-Element einen Aktuator nach einem der Ansprüche 1 bis 12 aufweist.

## Claims

1. An actuator for a haptic feedback element of an input element for electronic devices, which is designed as an electrostatic parallel-plate actuator comprising electrode plates (4,5) held at a variable normal distance relative to each other, to which an electric voltage can be applied and between which a dielectric (6) different from air is provided, **characterized in that** said dielectric (6) has a relative permittivity of 5-1000 and a specific insulation resistance of 10⁷-10¹⁰ Ωm.

2. An actuator according to claim 1, **characterized in that** the dielectric (6) has a relative permittivity of 20-1000, preferably 50-1000.

3. An actuator according to claim 1 or 2, **characterized in that** the dielectric (6) has a specific insulation resistance of 10⁷-10⁹ Ωm, preferably 10⁷-10⁸ Ωm.

4. An actuator according to claim 1, 2 or 3, **characterized in that** at least one electrode plate (4,5) is held so as to be deflectable relative to a rigidly arranged electrode plate (4, 5).

5. An actuator according to claim 4, **characterized in that** the at least one electrode plate (4,5) is deflectable against the force of a restoring element.

6. An actuator according to any one of claims 1 to 5, **characterized in that** an electrode plate (4,5), in particular the rigid electrode plate (4,5), is comprised of a metal plate or a metal grid.

7. An actuator according to any one of claims 1 to 6, **characterized in that** an electrode plate (4,5), in particular the at least one deflectable electrode plate (4,5), is formed by a metal coat, in particular copper coat, of a carrier plate (7).

8. An actuator according to any one of claims 1 to 7, **characterized in that** the dielectric (6) comprises at least one dielectric layer applied to an electrode plate (4,5), in particular to the metal coat.

9. An actuator according to claim 8, **characterized in that** the at least one dielectric layer is comprised of a layer of an insulation paste and/or a layer of a resistance paste.

10. An actuator according to claim 8 or 9, **characterized in that** the at least one dielectric layer is supplemented with a permittivity-enhancing material, preferably a ceramic powder such as calcium copper titanate.

11. An actuator according to claim 8, 9 or 10, **characterized in that** the dielectric (6) has a thickness of 200-300µm.

12. An actuator according to any one of claims 8 to 11, **characterized in that** the carrier plate (7) is comprised of a printed circuit board.

13. An input element for electronic devices, comprising a translationally movable touch surface and a haptic feedback element for translationally deflecting the touch surface, wherein the feedback element comprises an actuator according to any one of claims 1 to 12.

## Revendications

1. Actionneur pour un élément de rétroaction tactile d'un élément de saisie pour des appareils électroniques qui est réalisé en tant qu'actionneur à plaques parallèles électrostatique comprenant des plaques d'électrode (4, 5) maintenues à une distance perpendiculaire variable l'une par rapport à l'autre au niveau desquelles une tension électrique peut être appliquée et entre lesquelles est disposé un diélectrique (6) différent de l'air, **caractérisé en ce que** le diélectrique (6) présente une permittivité relative de 5 à 1 000 et une résistance à l'isolation spécifique de 10⁷ à 10¹⁰ Ωm.

2. Actionneur selon la revendication 1, **caractérisé en ce que** le diélectrique (6) présente une permittivité relative de 20 à 1 000, de préférence de 50 à 1 000.

3. Actionneur selon la revendication 1 ou 2, **caractérisé en ce que** le diélectrique (6) présente une résistance à l'isolation spécifique de 10⁷ à 10⁹ Ωm, de préférence de 10⁷ à 10⁸ Ωm.

4. Actionneur selon la revendication 1, 2 ou 3, **caractérisé en ce qu'**au moins une plaque d'électrode (4, 5) est maintenue de manière à pouvoir être déviée par rapport à une plaque d'électrode (4, 5) disposée de manière rigide.

5. Actionneur selon la revendication 4, **caractérisé en ce que** l'au moins une plaque d'électrode (4, 5) peut être déviée à l'encontre de la force d'un élément de repositionnement.

6. Actionneur selon l'une des revendications 1 à 5, **caractérisé en ce qu'**une plaque d'électrode (4, 5), en particulier la plaque d'électrode rigide (4, 5), est formée par une plaque métallique ou une grille métallique.

7. Actionneur selon l'une des revendications 1 à 6, **caractérisé en ce qu'**une plaque d'électrode (4, 5), en particulier l'au moins une plaque d'électrode (4, 5) qui peut être déviée, est formée par un revêtement métallique, en particulier en cuivre, d'une plaque de support (7).

8. Actionneur selon l'une des revendications 1 à 7, **caractérisé en ce que** le diélectrique (6) comprend au moins une couche de diélectrique déposée sur une plaque d'électrode (4, 5), en particulier sur le revêtement métallique.

9. Actionneur selon la revendication 8, **caractérisé en ce que** la au moins une couche de diélectrique est formée par une couche d'une pâte d'isolation et/ou une couche d'une pâte de résistance.

10. Actionneur selon la revendication 8 ou 9, **caractérisé en ce que** la au moins une couche de diélectrique est déplacée avec un matériau accroissant la permittivité, de préférence une poudre céramique, comme par exemple le titanate de calcium et de cuivre.

11. Actionneur selon la revendication 8, 9 ou 10, **caractérisé en ce que** le diélectrique (6) présente une épaisseur de 200 à 300 µm.

12. Actionneur selon l'une des revendications 8 à 11, **caractérisé en ce que** la plaque de support (7) est formée par une carte de circuit imprimé.

13. Élément de saisie pour des appareils électroniques, comprenant une surface de contact mobile par translation et un élément de rétroaction tactile pour dévier par translation la surface de contact, dans lequel l'élément de rétroaction présente un actionneur selon l'une des revendications 1 à 12.
